Europäisches Patentamt

European Patent Office

Office européen des brevets

(19)

(11) Publication number: **0 077 647**
**A2**

(12) **EUROPEAN PATENT APPLICATION**

(21) Application number: **82305466.3**

(22) Date of filing: **14.10.82**

(51) Int. Cl.³: **H 04 N 5/64**

(30) Priority: **20.10.81 JP 156794/81**

(43) Date of publication of application:
**27.04.83 Bulletin 83/17**

(84) Designated Contracting States:
**DE GB**

(71) Applicant: **Matsushita Electric Industrial Co., Ltd.**
**1006, Oaza Kadoma**
**Kadoma-shi Osaka-fu, 571(JP)**

(72) Inventor: **Taniguchi, Koji**
**23-66 Taishogun Hirakawa**
**Joyo-shi Kyoto-fu(JP)**

(74) Representative: **Crawford, Andrew Birkby et al,**
**A.A. THORNTON & CO. Northumberland House 303-306**
**High Holborn**
**London WC1V 7LE(GB)**

(54) **Cabinet.**

(57) An improved cabinet for television receivers and the like comprises a main body (1) and an escutcheon panel (3). The panel (3) is provided with a plurality of flanges (4) around its periphery and which extend rearwardly therefrom. A projection (5) is provided at the forward edge of each flange (4), while a recess (2) is formed in an inner wall of the cabinet main body (1) and arranged to receive the projections (5) so that the escutcheon panel (3) is readily fixed to the cabinet main body (1) through a simple operation.

*FIG. I.*

EP 0 077 647 A2

- 1 -

Cabinet

The present invention relates to a cabinet for a television receiver or the like and more particularly, to a cabinet which is readily assembled.

Cabinets for television receivers have already been proposed which have a main body and an escutcheon panel either made in one piece as in U.K. Specification No. 1452090 or in two pieces as in U.S. Specification No. 3712958 In either case, nails or staples are used to hold the escutcheon panel to the main body which is made of wood. A disadvantage of either of the previous proposals is that hands or tools must be inserted into the cabinet main body for driving the staples, with a consequent reduction of working efficiency.

The present invention provides a cabinet which comprises a cabinet main body, an escutcheon panel attached to an opening formed at a front side of said cabinet main body, and flange portions provided on the escutcheon panel so as to extend rearwardly from a peripheral portion of said escutcheon panel for engagement with an inner side of said opening at the front side of said cabinet main body, characterised in that said flange portions and said inner side of said opening at the front side being respectively provided with a projection and a recess which are mutually engageable with each other.

In order that the present invention be more readily understood, an embodiment thereof will now be described by way of example with reference to the accompanying drawing, in which:-

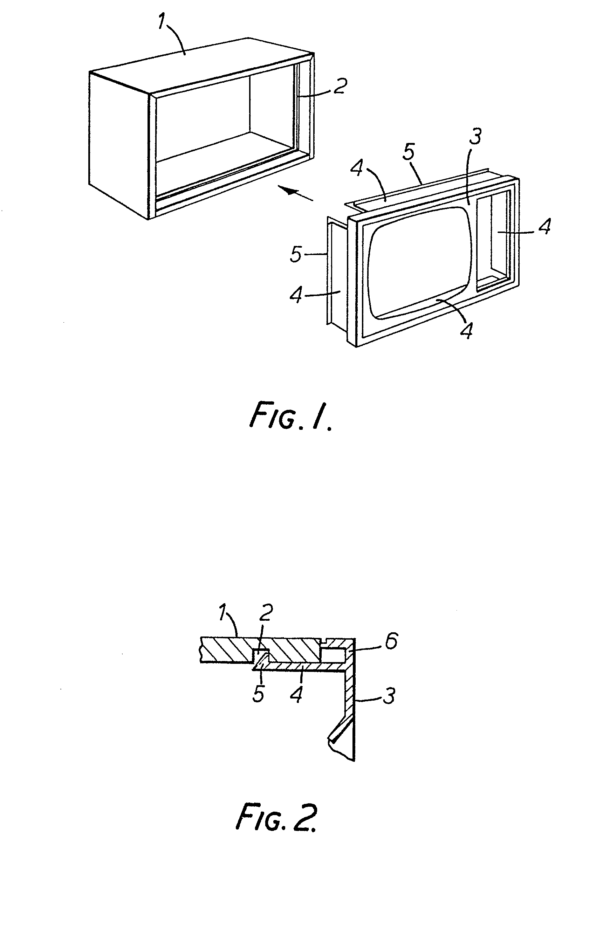

Figure 1 is an exploded perspective view of an improved cabinet construction according to the present invention; and

Figure 2 is a cross-sectional side view of a detailed portion of Figure 1.

Referring now to the drawing, one preferred embodiment of the present invention comprises a cabinet main body 1 which has a groove 2 formed in the face at an inner side wall of the body 1 adjacent a front opening thereof. A plastics escutcheon panel 3 is attached to the front opening of the body 1 by means of flange portions 4 integrally formed with the escutcheon panel 3 and extending rearwardly from all four sides of said escutcheon panel 3. The flange portions 4 are so constructed as to fit exactly into the front opening of the cabinet main body 1, with a projection 5 formed at a forward edge portion, each flange portion 4 engaging with said groove 2. The front of the escutcheon panel 3 has an L-shaped extension 6 around its periphery which covers the otherwise exposed front edge of the main body 1. The distance between the free end of the L-shaped extension 6 and the projections 5 is carefully chosen to be the same as the distance of the groove 2 from the front edge of the body 1 so that the panel 3 can be rigidly located.

By the construction as described so far, for assembly, the flange portions 4 of the escutcheon panel 3 are fitted into the front opening of the cabinet main body 1 and the projections 5 are shaped to facilitate flexing of the flange portions 4 during the fitting procedure. When the projections 5 come into registry with the groove 2, the flange portions 4 spring back into their original position and the projections 5 lock into the groove 2. By the above arrangement, driving of staples, etc. is not required, and thus, assembly may be effected through a very simple operation.

It should further be noted that a recess could be formed in the flange portions for engagement with a projection on the inner walls of the cabinet main body.

CLAIMS: -

1.      A cabinet which comprises a cabinet main body
(1), an escutcheon panel (3) attached to an opening
formed at a front side of said cabinet main body (1),
and flange portions (4) provided on the escutcheon panel
(3) so as to extend rearwardly from a peripheral portion
of said escutcheon panel (3) for engagement with an
inner side of said opening at the front side of said
cabinet main body (1), characterised in that said flange
portions (4) and said inner side of said opening at the
front side being respectively provided with a projection
(5) and a recess (2) which are mutually engageable with
each other.

2.      A cabinet according to claim 1, wherein the
periphery of the escutcheon panel (3) is provided with
an extension (6) arranged to cover the front edge of
the main body (1), which extension (6) has a portion
which extends in the direction of the flange portions
(4) and is arranged to engage the front edge of main
body (1) whereby to rigidly fix the panel (3) to the
main body (1).

0077647

1/1

FIG. 1.

FIG. 2.